# EUROPÄISCHE PATENTSCHRIFT

(11) **EP 1 129 001 B1**
(45) Veröffentlichungstag und Bekanntmachung des Hinweises auf die Patenterteilung: **17.12.2003**
(21) Anmeldenummer: 99955928.9
(22) Anmeldetag: 30.10.1999
(51) Int. Cl.: B60T 13/72, B60T 13/66, B60T 7/04, B60T 8/32

(54) **VERFAHREN UND VORRICHTUNG ZUR STEUERUNG EINER BREMSANLAGE EINES FAHRZEUGES**
METHOD AND DEVICE FOR CONTROLLING A BRAKE SYSTEM OF A VEHICLE
PROCEDE ET DISPOSITIF POUR LA COMMANDE D'UNE INSTALLATION DE FREINAGE D'UN VEHICULE

(30) Priorität: 11.11.1998 DE 19852064
(43) Veröffentlichungstag der Anmeldung: 05.09.2001
(73) Patentinhaber: Volkswagen Aktiengesellschaft, 38436 Wolfsburg (DE)
(72) Erfinder: SCHÄFER, Peter, D-38106 Braunschweig (DE); MAUS, Dieter, D-31249 Hohenhameln (DE); HEUER, Rudolph, D-38551 Ribbesbüttel (DE)
(86) Internationale Anmeldenummer: EP9908299
(87) Internationale Veröffentlichungsnummer: WO00027680

(56) Entgegenhaltungen:
- EP-A- 0 616 932
- DE-A- 19 607 048
- DE-A- 19 629 229
- DE-A- 19 734 567
- DE-A- 19 745 128
- DE-C- 19 744 112

## Beschreibung

Die Erfindung betrifft ein Verfahren zur Steuerung einer Bremsanlage eines Fahrzeuges nach dem Oberbegriff der Patentansprüche 1 und 5 sowie eine Vorrichtung zur Steuerung einer Bremsanlage eines Fahrzeuges nach dem Oberbegriff der Patentansprüche 9 und 12.

Die Verkürzung des Bremsweges eines Kraftfahrzeuges ist eines der vordringlichsten Probleme von Kraftfahrzeugen, da eine Vielzahl schwerer und teilweise tödlicher Unfälle dadurch vermieden werden könnte, wenn der Bremsweg nur um einige Meter hätte verkürzt werden können. Dadurch wurde eine Vielzahl von Anstrengungen unternommen, um den Bremsweg neben einer kontinuierlichen Verbesserung der Bremsanlage weiter zu reduzieren.

Aus der DE 40 28 290 C1 ist bereits ein Verfahren zur Verkürzung des Bremsweges in kritischen Fahrsituationen bekannt, bei dem eine Fremdkraft für einen erhöhten Bremsdruck sorgt, sobald die Pedalbetätigungsgeschwindigkeit einen Schwellwert übersteigt. Man geht davon aus, daß es Fälle gibt, in denen bei einer Panik- oder Notbremsung der Fahrer das Pedal zwar mit hoher Geschwindigkeit betätigt, jedoch nur eine unzureichende Kraft auf das Pedal ausübt. Durch die Fremdkraft wird daher in dieser Situation der Fahrer unterstützt und dadurch eine Bremskraft hervorgerufen, die höher ist als die Bremskraft, die bei normaler Pedalbetätigung der Pedalkraft entsprechen würde.

Das Grundprinzip dieses und ähnlicher Verfahren besteht darin, mittels geeigneter Sensoren eine Fußbewegungsgeschwindigkeit oder eine Pedalgeschwindigkeit, entweder des Gas- oder des Bremspedals, durch geeignete Sensoren zu erfassen und bei Überschreitung eines Schwellenwertes mittels einer Fremdkraft den Bremsdruck zu erhöhen. Da moderne Kraftfahrzeuge üblicherweise über Bremskraftverstärker verfügen, erfolgt die Erhöhung des Bremsdrucks durch eine Veränderung der Übertragungscharakteristik des Bremskraftverstärkers.

Zur Vermeidung einer ungewollten Zuschaltung der Fremdkraft sind verschiedene Verfahren und Vorrichtungen vorgeschlagen worden, denen jeweils gemeinsam ist, zwischen der schnellen Fußbewegung aufgrund einer beabsichtigen Bremsung oder einem beabsichtigten Gangwechsel zu unterscheiden. Hierzu sei beispielsweise auf die DE 44 30 461 verwiesen, in der ein fahreradaptives Lemverfahren vorgeschlagen wird.

Aus der DE 196 07 048 A1 ist eine Bremsanlage bekannt, bei der bei Erfassung einer bestimmten Pedalgeschwindigkeit die Bremse vorgespannt wird, so daß der Leerweg der Bremse gegen Null verschoben wird. Weiter wird dort vorgeschlagen, daß gegebenenfalls die Bremse derart vorgespannt wird, daß bereits ohne Betätigung des Bremspedals ein Bremsdruck erzeugt wird.

Aus der DE 196 29 229 A1 ist ein Verfahren zur Durchführung eines automatischen Bremsvorgangs bekannt, bei dem dann, wenn die Rücknahmegeschwindigkeit des Gaspedals einen Schwellenwert überschreitet und ein Umsetzen des Fußes des Fahrers von Gaspedal auf das Bremspedal festgestellt wird, ein automatischer Bremsvorgang ausgelöst wird, während dessen in den Radbremsen ein Bremsdruck erzeugt wird und dann beendet wird, wenn entweder eine bestimmte Zeit seit dem Auslösen des Bremsvorgangs überschritten wird oder wenn eine Betätigung des Bremspedals durch den Fahrer erfolgt.

Bei den beiden zuvor genannten Erfindungen erfolgt eine Auslösung der unterstützenden Maßnahmen infolge der Erkennung eines bestimmten Fahrerverhaltens und nicht infolge eines bestimmten Fahrzeugverhaltens.

Aus der DE 197 44 112 C1 ist eine Fahrzeugbremsanlage mit einem elektronisch steuerbaren Bremskraftverstärker bekannt, wobei bei Vorliegen bestimmter fahrdynamischer Zustände oder externer Einflüsse oder Kombinationen davon, die eine Betätigung eines Hauptbremszylinders innerhalb eines vorbestimmten Zeitintervalls mit einer vorbestimmten Wahrscheinlichkeit erforderlich machen, eine elektronische Steuereinheit Stromsignale für eine elektromagnetische Betätigungseinrichtung erzeugt, so daß die Steuerventilanordnung in einem Maße betätigt wird, daß zumindest in dem Bremskraftverstärker vorhandenes Spiel, Leerwege oder toleranzbedingte Totwege überwunden werden.

Des weiteren ist aus der DE 44 15 613 eine hydraulische Zweikreis-Bremsanlage für ein Straßenfahrzeug bekannt, das mit einem nach dem Rückförderprinzip arbeitenden Antiblockiersystem (ABS) sowie mit einer Einrichtung zur Fahrdynamik-Regelung (FDR), die nach dem Prinzip arbeitet, durch selbsttätige, elektronisch gesteuerte Aktivierung einer oder mehrerer Radbremse(n) den Längs- und den Seitenschlupf der Fahrzeugräder innerhalb mit dynamischer Stabilität des Fahrzeuges insgesamt verträglicher Grenzen zu halten sowie mit einer Einrichtung zur selbsttätigen Auslösung einer Vollbremsung ausgerüstet ist, wenn der Fahrer das Bremspedal mit einer Geschwindigkeit betätigt, die größer als ein Schwellenwert ist, wobei
a) die Bremsanlage eine Vorderachs-/Hinterachs-Bremskreisaufteilung hat und als Bremsdruck-Steuergerät ein mittels eines Bremspedals über einen Bremskraftverstärker betätigbarer, statischer Hauptzylinder mit den Bremskreisen einzeln zugeordneten Druckausgängen vorgesehen ist;
b) die Auswahl der im Fahrdynamik-Regelungsbetrieb zu aktivierenden Radbremse(n) durch selektive Ansteuerung der Bremsdruck-Regelventile des Antiblockiersystems erfolgt;
c) ein Pedalstellungs-Sensor vorgesehen ist, der für die jeweilige Momentanstellung des Bremspedals charakteristische elektrische Ausgangssignale erzeugt, die durch eine für die Steuerung des jeweiligen Regelungsbetriebes - FDR und/oder ABSvorgesehene elektronische Steuereinheit als Sollwert-Information für die vom Fahrer gewünschte Fahrzeugverzögerung verarbeitbar sind und
d) ein Drucksensor vorgesehen ist, der für die Momentanwerte des in den Vorderachs-Bremskreis eingekoppelten Bremsdruckes charakteristische elektrische Ausgangssignale erzeugt, die durch die elektronische Steuereinheit als Bremsdruck-Istwert-Informationssignale verarbeitbar sind;
e) das Bremsdruck-Steuergerät (17, 18) sowohl durch pedalgesteuerte Druckbeaufschlagung eines Antriebsdruckraumes (31) seines Bremskraftverstärkers (17) als auch durch selbsttätig durch Ausgangssignale der elektronischen Steuereinheit (22) auslösbare, ventilgesteuerte Druckbeaufschlagung des Antriebsdruckraumes (31) des Bremskraftverstärkers (17) in den Bremsdruck-Versorgungsbetrieb steuerbar ist;
f) zu einer ergänzenden oder ausschließlichen Bremsdruckversorgung des Vorderachs-Bremskreises (I) der Bremsanlage (10) ist ein ventilgesteuerter mit dem Ausgangsdruck einer Hilfsdruckquelle (94) beaufschlagbarer und wiederentlastbarer Hilfszylinder (59) vorgesehen, mittels dessen sowohl bei einer normalen - vom Fahrer gesteuerten - als auch bei einer selbsttätig gesteuerten Teil- oder Vollbremsung Bremsflüssigkeit in den an den Primär-Druckausgang (23) des Bremsdruck-Steuergeräts (17, 18) angeschlossenen Bremskreis (I) verdrängbar ist;
g) der Hilfszylinder (59) ist in der Art eines Druckübersetzers ausgebildet, dessen maximales Ausgangsdruckventil hinreichend hoch für die Nutzung hoher Kraftschlußbeiwerte im Fahrdynamik-Regelungsbetrieb bemessen ist;
h) die mittels des Hilfszylinders (59) in den Vorderachs-Bremskreis (I) verdrängbare Bremsflüssigkeitsmenge ist aus einer vergleichenden Verarbeitung der Ausgangssignale des Pedalstellungs-Sensors (21) mit den Ausgangssignalen des Drucksensors (102) in vorgebbarer monotoner- Korrelation steuerbar.

Nachteilig an dieser Vorrichtung ist, daß automatisch eingeleitete Bremsvorgänge nicht nur zu Akzeptanzproblemen beim Kraftfahrzeug führen, sondern auch unbeabsichtigt in nicht kritischen Situationen zu Gefahrensituationen führen können.

Aus der DE 43 02 541 ist ein automatisches Bremssystem für ein Kraftfahrzeug bekannt, mit einer Einrichtung zum Erfassen einer Entfernung und einer Relativgeschwindigkeit zwischen dem Fahrzeug und einem Hindernis, einer Einrichtung zum Feststellen eines ersten und eines zweiten Bereiches auf Basis der erfaßten Entfernung und Relativgeschwindigkeit, einer automatischen Bremse, die automatisch jeweilige Räder bremst, wenn die Feststelleinrichtung den zweiten Bereich feststellt, wobei die automatische Bremse einen Verstärker vom Vakuumtyp aufweist und einer Einrichtung zum Erhöhen des Unterdruckes der automatischen Bremse, bevor der zweite Bereich festgestellt wird. Derartige automatische Bremsen bei Hindemiserkennung erzeugen theoretisch als auch praktisch bei ausgewählten Versuchsbedingungen den kürzesten Bremsweg. Allerdings gilt prinzipiell, daß derartige automatische Bremsen noch nicht zuverlässig genug die Situationen einer Vollbremsung erfassen. Ein weiterer Nachteil ist die sehr aufwendige Technik zur Erfassung und Auswertung der Hindernisse, so daß derartige Vorrichtungen in absehbarer Zeit für eine Serienfertigung nicht verfügbar sind.

Der Erfindung liegt daher die Aufgabe zugrunde, ein Verfahren und eine Vorrichtung zur Steuerung einer Bremsanlage zu schaffen, mittels derer einfach und zuverlässig der Bremsweg eines Fahrzeuges bei einer potentiell erfolgenden Vollbremsung durch den Fahrzeugführer verringert werden kann.

Die Aufgabe wird durch ein Verfahren mit den Merkmalen der Patentansprüche 1 und 5 sowie durch eine Vorrichtung mit den Merkmalen der Patentansprüche 9 und 12 gelöst. Vorteilhafte Aus- und Weiterbildungen sind in den Unteransprüchen aufgezeigt.

Gemäß einem ersten Aspekt der Erfindung ist bei einer Bremsanlage eines Fahrzeuges mit einer Einrichtung zur Einstellung bzw. Veränderung der Bremswirkung der Bremsanlage vorgesehen, daß bei Ermittlung eines fahrdynamisch kritischen Zustands des Fahrzeuges, d. h. bei der Gefahr des Ausbrechens bzw. Schleuderns des Fahrzeuges, die Verstärkung der Bremswirkung bei vorgegebener Pedalkraft zu erhöhen.

Nach der Beendigung des fahrdynamisch kritischen Zustandes wird die Verstärkung der Bremswirkung auf die ursprünglich eingestellte Verstärkung zurückgestellt.

Zur Veränderung der Verstärkung der Bremswirkung der Bremsanlage bei vorgegebener Pedalkraft auf das Bremspedal kann die Bremsanlage über einen Bremskraftverstärker mit veränderbarer Kennlinie verfügen. Die Veränderung der Kennlinie kann beispielsweise durch das Umschalten zwischen mindestens zwei Kennlinien erfolgen.

Eine andere Möglichkeit sieht vor, daß eine Einrichtung vorgesehen ist, welche automatisch die Bremsdrücke verändern kann, zum Beispiel eine Einrichtung zur Fahrdynamikregelung.

Gemäß einem anderen Aspekt der Erfindung, bei dem ebenfalls eine Verkürzung des Bremsweges erreicht werden kann, wird die Betätigungseinrichtung für die Zuspanneinrichtung einer Bremsanlage, weiche zum Abbremsen eines Fahrzeuges nach Überwinden eines Leerweges zwei Reibelemente gegeneinander drückt, bei Erfassen eines fahrdynamisch kritischen Zustandes derart angesteuert, daß der Leerweg überwunden wird. Mit anderen Worten die Bremse wird vorgespannt.

Zusätzlich kann nach einer Ausbildung der Erfindung vorgesehen sein, daß bei der Erfassung einer potentiell vom Fahrzeugführer beabsichtigten Vollbremsung die Verstärkung der Bremswirkung bei vorgegebener Pedalkraft erhöht und/oder die Bremseinrichtungen der einzelnen Fahrzeugräder vorgespannt werden.

Dabei kann die Erfassung einer potentiell beabsichtigten Vollbremsung auf verschiedenen Wegen erfolgen, nämlich über die Erfassung der Position des Stellorgans zur Bestimmung der Leistungsabgabe des Fahrzeuges oder auch über die Rücknahmebewegung des Gaspedals. Als ermittelbare Größe kann hier die Rücknahmegeschwindigkeit des Gaspedals verwendet werden.

Der Vorteil der Erfindung besteht insbesondere in einer spürbaren Verkürzung des Bremsweges in solchen Fahrsituationen, wenn eine Vollbremsung durch den Fahrzeugführer voraussehbar ist, ohne sich der Gefahr von Fehlauslösungen auszusetzen.

Nachfolgend wird die Erfindung anhand von Ausführungsbeispielen näher beschrieben. Die zugehörigen Zeichnungen zeigen:
- Fig. 1: einen prinzipiellen Aufbau einer erfindungsgemäßen Vorrichtung mit einer Einrichtung zur Einstellung der Verstärkung der Bremswirkung,
- Fig.2: einen prinzipiellen Aufbau einer erfindungsgemäßen Vorrichtung mit einer Einrichtung zur Einstellung der Verstärkung der Bremswirkung und einer Einrichtung zur Ermittlung einer potentiell beabsichtigten Vollbremsung und
- Fig.3: einen prinzipiellen Aufbau einer erfindungsgemäßen Vorrichtung mit einer Zuspanneinrichtung.

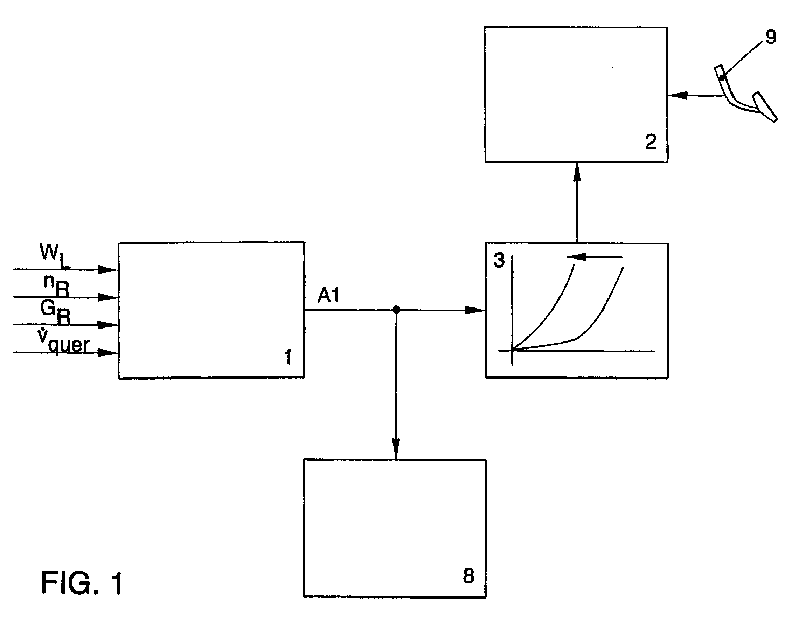

Das in Figur 1 gezeigte Ausführungsbeispiel der erfindungsgemäßen Vorrichtung weist eine Einrichtung 1 zur Erfassung eines fahrdynamisch kritischen Zustandes des Fahrzeuges auf, deren Ausgangssignal A1 neben einer Einrichtung 8 zur Fahrdynamikregelung (ESP) einer Steuereinrichtung 3 mindestens eines Bremskraftverstärkers 2 zugeleitet wird. Der Bremskraftverstärker 2 besitzt mehrere Verstärkungskennlinien, auf die zur Veränderung der Verstärkung der Bremswirkung der Bremsanlage bei vorgegebener Pedalkraft auf das Bremspedal 9 geschaltet wird.

Der Einrichtung 1 zur Erfassung eines fahrdynamisch kritischen Zustandes werden zur Ermittlung eines solchen Zustandes verschiedenste Sensorsignale zugeleitet, beispielsweise der Lenkradwinkel w_{L}, die Raddrehzahlen n_{R} der Fahrzeugräder, die Gierrate g_{R} und die Querbeschleunigung *ν̇*_{*quer*} des Fahrzeuges. Eine genaue Beschreibung der Ermittlung eines fahrdynamisch kritischen Zustandes in Verbindung mit einer Fahrdynamikregelung ist aus dem Selbststudienprogramm 204 "Elektronisches Stabilitäts-Programm" der Fa. AUDI bekannt.

Erkennt die Einrichtung 1 aus den genannten Sensorsignalen, daß eine kritische Situation entstehen kann und ein Eingriff notwendig werden kann, gibt sie ein entsprechendes Ausgangssignal A1 an die Einrichtung 8 und die Steuereinrichtung 3. Die Steuereinrichtung 3 schaltet auf eine Kennlinie des Bremskraftverstärkers 2 dahingehend, daß die Verstärkung der Bremsanlage bei gleicher Pedalkraft auf das Bremspedal 9 erhöht wird. Ermittelt dann die Einrichtung 1 aus den ihr zugeführten Sensorsignalen, daß kein fahrdynamisch kritischer Zustand mehr vorliegt, steht die Steuereinrichtung 3 den Bremskraftverstärker 2 auf seine ursprüngliche Verstärkungskennlinie zurück.

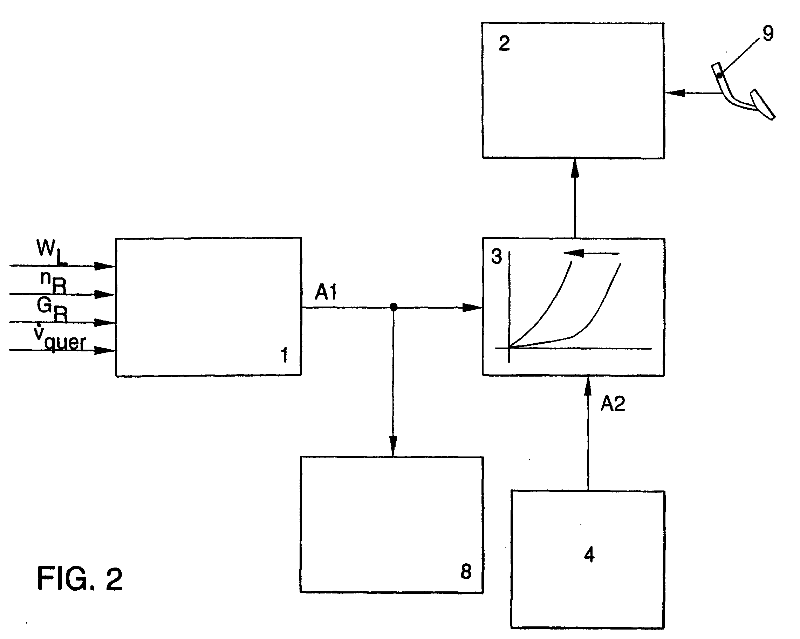

Die Vorrichtung gemäß Fig. 2 unterscheidet sich nur insofern von der in Fig. 1 dargestellten Vorrichtung, daß der Steuereinrichtung 3 für den Bremskraftverstärker 2 zusätzlich das Ausgangssignal A2 einer Einrichtung 4 zur Ermittlung einer potentiell beabsichtigten Vollbremsung durch den Fahrzeugführer zugeleitet wird. Eine solche Einrichtung 4 kann beispielsweise eine aus dem Stand der Technik bekannte Sensoreinrichtung zur Erfassung der Position des Stellorgans zur Bestimmung der Leistungsabgabe derAntriebsmaschine des Fahrzeuges oder aber auch eine Einrichtung zur Rücknahmebewegung des Gaspedals sein. Ermittelt die Steuereinrichtung 3 nun aus dem Ausgangssignals A2, daß der Fahrzeugführer beabsichtigt, eine Vollbremsung durchzuführen, schaltet sie den Bremskraftverstärker 2 ebenfalls auf eine Kennlinie größerer Verstärkung, wodurch eine Unterstützung des Fahrzeugführers während des Vollbremsvorgangs erzielt wird. Diese Funktion kann unabhängig davon erfolgen, ob ein fahrdynamisch kritischer Zustand vorliegt oder nicht.

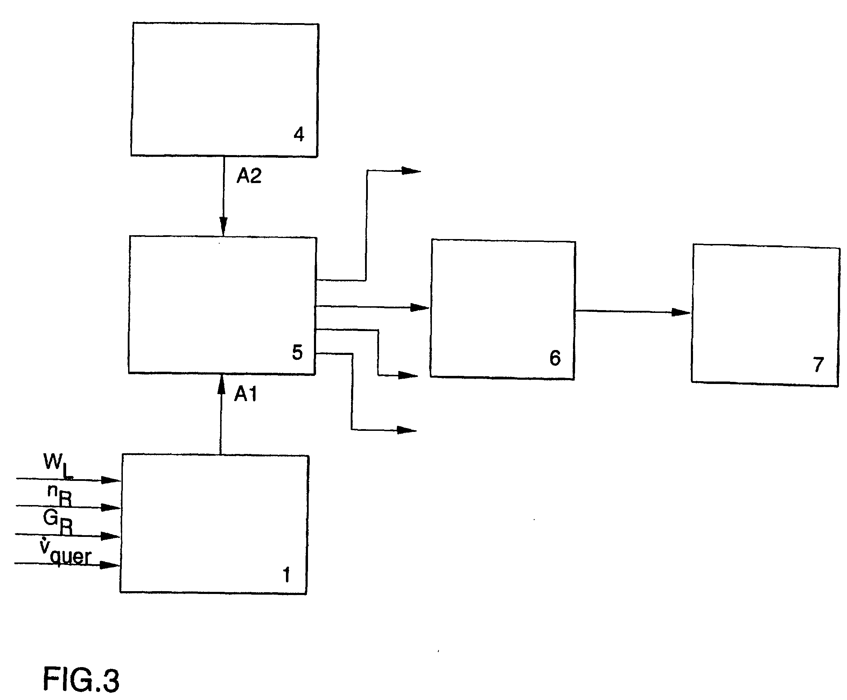

Die in Fig. 3 gezeigte Vorrichtung weist ebenfalls eine Einrichtung 1 zur Erfassung eines fahrdynamisch kritischen Zustands des Fahrzeuges auf, deren Ausgangssignal A1 einer Steuerungseinrichtung 5 zugeführt wird. Die Steuerungseinrichtung 5 steuert für jedes Fahrzeugrad eine Betätigungseinrichtung 6 an. Diese wiederum betätigt eine Zuspanneinrichtung 7, die zum Abbremsen des jeweiligen Fahrzeugrades nach dem Überwinden eines Leerweges zwei Reibelemente gegeneinander drückt.

Wird nun durch die Einrichtung 1 ein fahrdynamisch kritischer Zustand erkannt, steuert die Steuerungseinrichtung 5 die Betätigungseinrichtung 6 derart an, daß bereits vor dem vom Fahrzeugführer tatsächlich ausgelösten Bremsvorgang, der Leerweg überwunden wird, bzw. die Bremse vorgespannt wird.

Zusätzlich kann auch hier eine Einrichtung 4 zur Ermittlung einer potentiell beabsichtigten Vollbremsung vorgesehen werden, deren Ausgangssignal A2 ebenfalls der Steuerungseinrichtung 5 zugeführt wird.

### BEZUGSZEICHENLISTE

- 1: Einrichtung zur Erfassung eines fahrdynamisch kritischen Zustandes
- 2: Bremskraftverstärker
- 3: Steuereinrichtung
- 4: Einrichtung zur Ermittlung einer beabsichtigten Vollbremsung
- 5: Steuereinrichtung
- 6: Betätigungseinrichtung
- 7: Zuspanneinrichtung
- 8: Einrichtung zur Fahrdynamikregelung
- 9: Bremspedal

- A1: Ausgangssignal
- A2: Ausgangssignal
- W_{L}: Lenkradwinkel
- n_{R}: Raddrehzahlen
- g_{R}: Gierrate
- *ν̇*_{*quer*}: Querbeschleunigung

## Patentansprüche

1. Verfahren zur Steuerung einer Bremsanlage eines Fahrzeuges mit einer Einrichtung (2, 3) zur Einstellung der Verstärkung der Bremswirkung der Bremsanlage, **dadurch gekennzeichnet, daß** die Verstärkung der Bremswirkung bei vorgegebener Pedalkraft erhöht wird, wenn durch eine Einrichtung (1) zur Ermittlung eines fahrdynamisch kritischen Zustandes, weiche zur Erfassung des fahrdynamisch kritischen Zustandes wenigstens eines der Signale Gierrate (g_{R}) oder Querbeschleunigung (*ν̇*_{*quer*}) des Fahrzeuges ermittelt und auswertet, ein fahrdynamisch kritischer Zustand des Fahrzeuges erfaßt wird.

2. Verfahren nach Anspruch 1, **dadurch gekennzeichnet, daß** bei Erfassen der Beendigung des fahrdynamisch kritischen Zustandes die Verstärkung der Bremswirkung auf die ursprünglich eingestellte Verstärkung zurückgestellt wird.

3. Verfahren nach Anspruch 1 oder 2, **dadurch gekennzeichnet, daß** die Einrichtung zur Einstellung der Verstärkung der Bremswirkung der Bremsanlage ein Bremskraftverstärker (2, 3) mit veränderbarer Kennlinie ist und die Kennlinie des Bremskraftverstärkers (2, 3) zu einer Erhöhung der Verstärkung der Bremswirkung der Bremsanlage bei vorgegebener Pedalkraft verändert wird, wenn durch die Einrichtung (1) zur Ermittlung eines fahrdynamisch kritischen Zustandes ein fahrdynamisch kritischer Zustand des Fahrzeuges erfaßt wird.

4. Verfahren nach Anspruch 3, **dadurch gekennzeichnet, daß** die Veränderung der Kennlinie des Bremskraftverstärkers (2) durch Umschalten zwischen mindestens zwei Kennlinien erfolgt.

5. Verfahren zur Steuerung einer Bremsanlage eines Fahrzeuges mit mindestens einer Zuspannvorrichtung (7), die zum Abbremsen eines Fahrzeugrades nach Überwinden eines Leerweges zwei Reibelemente gegeneinander drückt und einer Betätigungseinrichtung (6) für die Zuspanneinrichtung (7), **dadurch gekennzeichnet, daß** bei Erfassen eines fahrdynamisch kritischen Zustandes des Fahrzeuges durch eine Einrichtung (1) zur Ermittlung eines fahrdynamisch kritischen Zustandes, welche zur Erfassung des fahrdynamisch kritischen Zustandes wenigstens eines der Signale Gierrate (g_{R}) oder Querbeschleunigung (*ν̇*_{*quer*}) des Fahrzeuges ermittelt und auswertet, die Betätigungseinrichtung (6) derart angesteuert wird, daß der Leerweg überwunden wird.

6. Verfahren nach einem der vorangehenden Ansprüche, **dadurch gekennzeichnet, daß** bei Erfassung einer potentiell vom Fahrzeugführer beabsichtigten Vollbremsung die Verstärkung der Bremswirkung bei vorgegebener Pedalkraft erhöht und/oder die Betätigungseinrichtung (6) für die Zuspanneinrichtung (7) derart angesteuert wird, daß der Leerweg überwunden wird.

7. Verfahren nach Anspruch 6, **dadurch gekennzeichnet, daß** die Erfassung einer potentiell beabsichtigten Vollbremsung über die Erfassung der Position des Stellorgans zur Bestimmung der Leistungsabgabe des Fahrzeuges erfolgt.

8. Verfahren nach Anspruch 6, **dadurch gekennzeichnet, daß** die Erfassung einer potentiell beabsichtigten Vollbremsung über die Rücknahmebewegung des Gaspedals erfolgt

9. Vorrichtung zur Steuerung einer Bremsanlage eines Fahrzeuges mit einer Einrichtung (2, 3) zur Einstellung der Verstärkung der Bremswirkung der Bremsanlage, **dadurch gekennzeichnet, daß** eine Einrichtung (1) zur Erfassung eines fahrdynamisch kritischen Zustandes vorgesehen ist, welche wenigstens eines der Signale Gierrate (g_{R}) oder Querbeschleunigung (*ν̇*_{*quer*}) des Fahrzeuges ermittelt und auswertet, wobei deren Ausgangssignal (A1 ) als Eingangssignal der Einrichtung (2, 3) zur Einstellung der Verstärkung der Bremswirkung der Bremsanlage dient und die Verstärkung der Bremswirkung der Bremsanlage bei vorgegebener Pedalkraft gegenüber dem Normalzustand erhöht ist, wenn durch die Einrichtung (1) zur Erfassung eines fahrdynamisch kritischen Zustandes ein fahrdynamisch kritischer Zustand des Fahrzeuges erfaßt ist.

10. Vorrichtung nach Anspruch 9, **dadurch gekennzeichnet, daß** die Einrichtung zur Einstellung der Verstärkung der Bremswirkung der Bremsanlage ein Bremskraftverstärker (2, 3) mit veränderbarer Kennlinie ist.

11. Vorrichtung nach Anspruch 10, **dadurch gekennzeichnet, daß** die Veränderung der Kennlinie des Bremskraftverstärkers (2, 3) durch Umschalten zwischen mindestens zwei Kennlinien erfolgt.

12. Vorrichtung zur Steuerung einer Bremsanlage eines Fahrzeuges mit mindestens einer Zuspanneinrichtung (7), die zum Abbremsen eines Fahrzeugrades nach Überwinden eines Leerweges zwei Reibelemente gegeneinander drückt, und einer Betätigungseinrichtung (6) für die Zuspanneinrichtung (7), **dadurch gekennzeichnet, daß** einer Steuerungseinrichtung (5) der Betätigungseinrichtung (6) das Ausgangssignal (A1) einer Einrichtung (1) zur Erfassung eines fahrdynamisch kritischen Zustandes des Fahrzeuges, welche wenigstens eines der Signale Gierrate (g_{R}) oder Querbeschleunigung (*ν̇*_{*quer*}) des Fahrzeuges ermittelt und auswertet, als Eingangssignal dient und bei Erfassung eines fahrdynamisch kritischen Zustandes des Fahrzeuges durch die Einrichtung (1) zur Erfassung eines fahrdynamisch kritischen Zustandes die Steuereinrichtung (5) die Betätigungseinrichtung (6) derart ansteuert, daß der Leerweg überwunden wird.

13. Vorrichtung nach einen der Ansprüche 9 bis 12, **dadurch gekennzeichnet, daß** die Einrichtung (1) zur Erfassung eines fahrdynamisch kritischen Zustandes ein Teil einer Einrichtung (8) zur Fahrdynamikregelung ist.

14. Vorrichtung nach einem der vorangegangenen Ansprüche 9 bis 13, **dadurch gekennzeichnet, daß** eine Einrichtung (4) zur Erfassung einer potentiell vom Fahrzeugführer beabsichtigten Vollbremsung vorgesehen ist, deren Ausgangssignal (A2) als Eingangssignal der Einrichtung (2, 3) zur Einstellung der Verstärkung der Bremswirkung und/oder der Steuerungseinrichtung (5) der Betätigungseinrichtung (6) für die Zuspanneinrichtung (7) dient.

15. Vorrichtung nach Anspruch 14, **dadurch gekennzeichnet, daß** die Einrichtung (4) zur Erfassung einer potentiell beabsichtigten Vollbremsung eine Einrichtung zur Erfassung der Position des Stellorgans zur Bestimmung der Leistungsabgabe des Fahrzeuges ist.

16. Vorrichtung nach Anspruch 15, **dadurch gekennzeichnet, daß** die Einrichtung (4) zur Erfassung einer potentiell beabsichtigten Vollbremsung eine Einrichtung zur Erfassung der Rücknahmebewegung des Gaspedals ist.

## Claims

1. Method of controlling a brake system of a vehicle having a device (2, 3) for setting the boosting of the braking effect of the brake system, **characterized in that** the boosting of the braking effect for a predefined pedal force is increased if a state of the vehicle which is critical in terms of the dynamics of vehicle movement is registered by a device (1) for determining a state which is critical in terms of the dynamics of vehicle movement and which, in order to register the state which is critical in terms of the dynamics of vehicle movement, determines and evaluates at least one of the yaw rate (g_{R}) or transverse acceleration (*ν̇*_{*transv*}) signals of the vehicle.

2. Method according to Claim 1, **characterized in that**, when the end of the state which is critical in terms of the dynamics of vehicle movement is registered, the boosting of the braking effect is reset to the originally set boosting level.

3. Method according to Claim 1 or 2, **characterized in that** the device for setting the boosting of the braking effect of the brake system is a brake booster (2, 3) with variable characteristic curve, and the characteristic curve of the brake booster (2, 3) is changed in order to increase the boosting of the braking effect of the brake system for a predefined pedal force if a state of the vehicle which is critical in terms of the dynamics of vehicle movement is registered by the device (1) for determining a state which is critical in terms of the dynamics of vehicle movement.

4. Method according to Claim 3, **characterized in that** the change in the characteristic curve of the brake booster (2) takes place by switching over between at least two characteristic curves.

5. Method for controlling a brake system of a vehicle with at least one brake application device (7) which, in order to brake a vehicle wheel, presses two frictional elements together after overcoming an idle travel, and an activation device (6) for the brake application device (7), **characterized in that**, when a state of the vehicle which is critical in terms of the dynamics of the vehicle movement is registered by means of a device (1) for determining a state which is critical in terms of the dynamics of the vehicle movement and which, in order to register the state which is critical in terms of the dynamics of vehicle movement determines and evaluates at least one of the yaw rate (g_{R}) or transverse acceleration (*ν̇*_{*transv*}) signals of the vehicle, the activation device (6) is actuated in such a way that the idle travel is overcome.

6. Method according to one of the preceding claims, **characterized in that**, when a full braking operation which is potentially intended by the vehicle driver is registered, the boosting of the braking effect for a predefined pedal force is increased and/or the activation device (6) for the brake application device (7) is actuated in such a way that the idle travel is overcome.

7. Method according to Claim 6, **characterized in that** a potentially intended full braking operation is registered by registering the position of the actuation element in order to determine the power output of the vehicle.

8. Method according to Claim 6, **characterized in that** a potentially intended full braking operation is registered by means of the return movement of the accelerator pedal.

9. Apparatus for controlling a brake system of a vehicle having a device (2, 3) for setting the boosting of the braking effect of the brake system, **characterized in that** a device (1) for registering a state which is critical in terms of the dynamics of vehicle movement is provided, which device determines and evaluates at least one of the yaw rate (g_{R}) or transverse acceleration (*ν̇*_{*transv*}₎ signals of the vehicle, its output signal (A1) serving as an input signal of the device (2, 3) for setting the boosting of the braking effect of the brake system, and the boosting of the braking effect of the brake system for a predefined pedal force being increased in comparison with the normal state if a state of the vehicle which is critical in terms of the dynamics of vehicle movement is registered by the device (1) for registering a state which is critical in terms of the dynamics of vehicle movement.

10. Apparatus according to Claim 9, **characterized in that** the device for setting the boosting of the braking effect of the brake system is a brake booster (2, 3) with variable characteristic curve.

11. Apparatus according to Claim 10, **characterized in that** the change in the characteristic curve of the brake booster (2, 3) occurs as a result of switching over between at least two characteristic curves.

12. Apparatus for controlling a brake system of a vehicle with at least one brake application device (7) which, in order to brake a vehicle wheel, presses two frictional elements together after overcoming an idle travel, and an activation device (6) for the brake application device (7), **characterized in that**, the output signal (A1) of a device (1) for registering a state of the vehicle which is critical in terms of the dynamics of vehicle movement and which determines and evaluates at least one of the yaw rate (g_{R}) or transverse acceleration (*ν̇*_{*transv*}) signals of the vehicle serves as an input signal for a control device (5) of the activation device (6), and when a state of the vehicle which is critical in terms of the dynamics of vehicle movement is registered by the device (1) for registering a state which is critical in terms of the dynamics of vehicle movement, the control device (5) actuates the activation device (6) in such a way that the idle travel is overcome.

13. Apparatus according to one of Claims 9 to 12, **characterized in that** the device (1) for registering a state which is critical in terms of the dynamics of vehicle movement is part of a device (8) for regulating the dynamics of vehicle movement.

14. Apparatus according to one of the preceding Claims 9 to 13, **characterized in that** a device (4) for registering a full braking operation which is potentially intended by the vehicle driver is provided, the output signal (A2) of which serves as an input signal of the device (2, 3) in order to set the boosting of the braking effect and/or the control device (5) of the activation device (6) for the brake application device (7).

15. Apparatus according to Claim 14, **characterized in that** the device (4) for registering a potentially intended full braking operation is a device for registering the position of the actuation element in order to determine the power output of the vehicle.

16. Apparatus according to Claim 15, **characterized in that** the device (4) for registering a potentially intended full braking operation is a device for registering the return movement of the accelerator pedal.

## Revendications

1. Procédé de commande d'une installation de freinage d'un véhicule comportant un dispositif (2, 3) de réglage de l'amplification de l'effet de freinage de l'installation de freinage, **caractérisé en ce que** l'amplification de l'effet de freinage augmente avec une force exercée sur la pédale prédéfinie lorsque, grâce à un dispositif (1) de détermination d'un état critique de dynamique de conduite qui détermine et exploite au moins un des signaux taux d'embardée (g_{R}) ou accélération transversale (vₜᵣₐₙₛ) du véhicule pour détecter l'état critique de dynamique de conduite, un état critique de dynamique de conduite du véhicule est détecté.

2. Procédé selon la revendication 1, **caractérisé en ce que**, en cas de détection de la fin de l'état critique de dynamique de conduite, l'amplification de l'effet de freinage est ramenée à l'amplification fixée à l'origine.

3. Procédé selon la revendication 1 ou 2, **caractérisé en ce que** le dispositif de réglage de l'amplification de l'effet de freinage de l'installation de freinage est un amplificateur de force de freinage (2, 3) à caractéristique modifiable et que la caractéristique de l'amplificateur de force de freinage (2, 3) est modifiée pour augmenter l'amplification de l'effet de freinage de l'installation de freinage avec une force exercée sur la pédale prédéfinie lorsqu'un état critique de dynamique de conduite du véhicule est détecté par le dispositif (1) de détermination d'un état critique de dynamique de conduite.

4. Procédé selon la revendication 3, **caractérisé en ce que** la modification de la caractéristique de l'amplificateur de force de freinage (2) a lieu par commutation entre au moins deux caractéristiques.

5. Procédé de commande d'une installation de freinage d'un véhicule comportant au moins un dispositif de serrage (7), qui, pour freiner une roue d'un véhicule après avoir franchi une course à vide, comprime deux éléments à friction l'un contre l'autre, et un dispositif d'actionnement (6) pour le dispositif de serrage (7), **caractérisé en ce que**, en cas de détection d'un état critique de dynamique de conduite du véhicule par un dispositif (1) de détermination d'un état critique de dynamique de conduite qui détermine et exploite au moins un des signaux taux d'embardée (g_{R}) ou accélération transversale (vₜᵣₐₙₛ) du véhicule pour détecter l'état critique de dynamique de conduite, le dispositif d'actionnement (6) est commandé de manière à ce que la course à vide soit franchie.

6. Procédé selon l'une quelconque des revendications précédentes, **caractérisé en ce que**, en cas de détection d'un freinage intégral envisagé potentiellement par le conducteur, l'amplification de l'effet de freinage avec une force exercée sur la pédale prédéfinie augmente et/ou que le dispositif d'actionnement (6) pour le dispositif de serrage (7) est commandé de manière à ce que la course à vide soit franchie.

7. Procédé selon la revendication 6, **caractérisé en ce que** la détection d'un freinage intégral potentiellement envisagé a lieu par le biais de la détection de la position de l'organe de positionnement destiné à déterminer la puissance fournie du véhicule.

8. Procédé selon la revendication 6, **caractérisé en ce que** la détection d'un freinage intégral potentiellement envisagé a lieu par le biais du mouvement de reprise de la pédale d'accélérateur.

9. Dispositif de commande d'une installation de freinage d'un véhicule comportant un dispositif (2, 3) de réglage de l'amplification de l'effet de freinage de l'installation de freinage, **caractérisé en ce qu'**est prévu un dispositif (1) de détection d'un état critique de dynamique de conduite, qui détermine et exploite au moins un des signaux taux d'embardée (g_{R}) ou accélération transversale (vₜᵣₐₙₛ) du véhicule, son signal de sortie (A1) servant de signal d'entrée du dispositif (2, 3) de réglage de l'amplification de l'effet de freinage de l'installation de freinage et l'amplification de l'effet de freinage de l'installation de freinage augmentant par rapport à l'état normal avec une force exercée sur la pédale prédéfinie lorsqu'un état critique de dynamique de conduite du véhicule est détecté par le dispositif (1) de détection d'un état critique de dynamique de conduite.

10. Dispositif selon la revendication 9, **caractérisé en ce que** le dispositif de réglage de l'amplification de l'effet de freinage de l'installation de freinage est un amplificateur de force de freinage (2, 3) à caractéristique modifiable.

11. Dispositif selon la revendication 10, **caractérisé en ce que** la modification de la caractéristique de l'amplificateur de force de freinage (2, 3) a lieu par commutation entre au moins deux caractéristiques.

12. Dispositif de commande d'une installation de freinage d'un véhicule comportant au moins un dispositif de serrage (7) qui, pour freiner une roue d'un véhicule après avoir franchi une course à vide, comprime deux éléments à friction l'un contre l'autre, et un dispositif d'actionnement (6) pour le dispositif de serrage (7), **caractérisé en ce que** le signal de sortie (A1) d'un dispositif (1) de détection d'un état critique de dynamique de conduite du véhicule, qui détermine et exploite au moins un des signaux taux d'embardée (g_{R}) ou accélération transversale (vₜᵣₐₙₛ) du véhicule, sert de signal d'entrée à un dispositif de commande (5) du dispositif d'actionnement (6) et, en cas de détection d'un état critique de dynamique de conduite du véhicule par le dispositif (1) de détection d'un état critique de dynamique de conduite, le dispositif de commande (5) commande le dispositif d'actionnement (6) de manière à ce que la course à vide soit franchie.

13. Dispositif selon l'une quelconque des revendications 9 à 12, **caractérisé en ce que** le dispositif (1) de détection d'un état critique de dynamique de conduite fait partie d'un dispositif (8) de régulation de la dynamique de conduite.

14. Dispositif selon l'une quelconque des revendications précédentes 9 à 13, **caractérisé en ce qu'**est prévu un dispositif (4) de détection d'un freinage intégral envisagé potentiellement par le conducteur, dont le signal de sortie (A2) sert de signal d'entrée au dispositif (2, 3) de réglage de l'amplification de l'effet de freinage et/ou au dispositif de commande (5) du dispositif d'actionnement (6) pour le dispositif de serrage (7).

15. Dispositif selon la revendication 14, **caractérisé en ce que** le dispositif (4) de détection d'un freinage intégral potentiellement envisagé est un dispositif de détection de la position de l'organe de positionnement destiné à déterminer la puissance fournie du véhicule.

16. Dispositif selon la revendication 15, **caractérisé en ce que** le dispositif (4) de détection d'un freinage intégral potentiellement envisagé est un dispositif de détection du mouvement de reprise de la pédale d'accélérateur.
